# EUROPEAN PATENT SPECIFICATION

(11) **EP 2 542 497 B1**
(45) Date of publication and mention of the grant of the patent: **22.04.2015**
(21) Application number: 10795605.4
(22) Date of filing: 03.12.2010
(51) Int. Cl.: B67C 3/24, B65G 47/84, B67C 3/20

(54) **CONTAINER-FILLING AND WEIGHT-RELATED DOSING DEVICE**
VORRICHTUNG FÜR BEHÄLTERBEFÜLLUNG UND GEWICHTSBEZOGENE DOSIERUNG
DISPOSITIF DE REMPLISSAGE DE CONTENANT ET DE DOSAGE EN FONCTION DU POIDS

(30) Priority: 01.03.2010 BG 11060710
(43) Date of publication of application: 09.01.2013
(73) Proprietor: "INDEX-6" LTD., 4004 Plovdiv (BG)
(72) Inventor: SPASOV, Petar Georgiev, 4002 Plovdiv (BG); MINCHEV, Evgeni Ivanov, 4023 Plovdiv (BG)
(74) Representative: Ilarionov, Pavko Jordanov
(86) International application number: PCT/BG2010/000026
(87) International publication number: WO 2011/106852

(56) References cited:
- EP-B1- 1 025 424
- WO-A1-03/078285
- DE-A1-102004 041 724
- JP-A- 2006 089 059
- US-B1- 6 302 172
- US-B1- 6 688 341

## Description

### FIELD OF THE INVENTION

This invention constitutes a container-filling and weight-related dosing device according to the preamble of claim 1 which can find application in machines and equipment, mainly in the food and flavor industry, intended for automated filling of fluids into containers with cylindrical ringed necks.

### BACKROUND OF THE INVENTION

There exists such a device according to the preamble of claim 1 for filling and measuring the weight of containers with cylindrical neck and a ring around the neck, consisting of connected gripping device and container weight measuring mechanism which measures the quantity of container content (EPO No. 1 025 424 B1). The gripping device consists of two jaws that move in a horizontal plane, connected with a spring and mounted on a supporting console plate. The console plate is connected with a tensometric sensor for receiving weight measurements from the weight measuring mechanism, which is a box consisting of hollow parts, fitted with a pipe and a protective sleeve.

At their front end, the jaws form a circular opening for gripping the neck of the container. There is a protrusion on the upper surface of the front end of each jaw on which rests the ring of the container during operation.

The filling and weighing device itself is part of a filling installation of the carousel type and it includes a rotating platform with a typical filling system equipped with filling nozzles and filling and weighing devices.

During operation of this device, containers are suspended vertically by their ring onto the jaws, the jaws being connected with the weight measuring mechanism.

The existing device has certain shortcomings, some of which are listed below:
- a complex structure with numerous elements, which is a condition for inaccurate operation of the weight measuring sensor;
- each container is gripped below its supporting ring, relying solely on the force of the spring drawing the two jaws together to provide the necessary stability of the container during the filling operation and the rotation of the carousel against the centrifugal forces, without any other additional fixation of the container. This means that the springs used must be powerful enough, which leads to a relatively fast wear of the elements providing the free rotation of the two jaws and of the elements of the container-feeding device and to the occurrence of vibrations in the process of receiving the container by the gripping device connected with the weight measuring mechanism;
- on the other hand, the protective pipes and sleeves used with the existing device are supposed to have a required clearance to ensure the accurate operation of the weight measuring element. During the operation of the filling machines and in the process of their cleaning, it is possible that these clearances become congested by splashes of the product being filled in or by the washing liquid, which is a condition for inaccurate operation of the weight measuring element;
- when operating with products that require a high level of filling hygiene, the so called microbiologically sensitive products, the automated cleaning of the device is obstructed by the numerous elements and clearances, which is a condition for contamination of the device.

### Specification of the Invention

The purpose of the invention is to create a filling and dosing device for containers with a cylindrical ringed neck with a simplified structure, which would ensure stability of containers during their filling and the rotation of the carousel, which would not affect the accuracy of the tensometric sensor.

This task is solved by means of a container-filling and weight-related dosing device according to claim 1 for containers with a cylindrical ringed neck, which consists of connected gripping device and weight measuring mechanism of a closed, air-tight type for weighing the containers during the process of filling. The gripping device consists of two jaws that move in a horizontal plane, mounted on a supporting console plate and connected with a spring so that in their front end the jaws form a circle for gripping the neck of the container.

According to the design of the invention, the spring of the gripping device is attached to the back ends of the two movable jaws of the gripping device, which are mounted onto the supporting plate so that they grip the cylindrical neck of the container above the ring during the filling operation. The rear end of the supporting plate is connected to the weighing mechanism, which is of a closed type. Between the middle sections of the two movable jaws is installed and attached to them a changeable fixing element, consisting of a bearing body mounted on the supporting plate. A fixing element is attached to the bearing body by means of a swivel joint under spring pressure. A protrusion is formed at the front end of the changeable fixing element, allowing for part of the upper surface of the ring on the cylindrical neck of the container to be pressed.

A rounded area is formed at the front end of the supporting plate, supporting and pressing part of the lower surface of the ring on the cylindrical neck of the container.

According to a variation of the realization of the gripping device, the two movable jaws are mounted onto the supporting plate so that they grip the cylindrical neck of the container below the ring.

The rear end of the supporting plate is connected to the weighing mechanism, which is of a closed, air-tight type.

The proposed device has a simplified structure, allowing the tensometric sensor to function with the required accuracy. This structure provides stability of containers on the three inter-perpendicular axes - X, Y and Z, during the process of filling and carousel rotation. Furthermore, the structure of the device provides a high level of cleanness, allowing it to be washed without affecting the operation of the tensometric sensor.

### Explanation of Attached Figures

The attached figures show a model of the invention where:
- Figure 1 shows a carousel type filling installation, including a rotating platform with a filling system. A number of filling and weight-related dosing devices for containers with a cylindrical neck are mounted onto the platform;
- Figure 2 presents a side view with a partial cross section of the gripping device of the filling and weight-related dosing device for containers with a cylindrical neck;
- Figure 3 presents a view from above of the gripping device in Figure 2;
- Figure 4 presents a cross section of the gripping device in Figure 2 and Figure 3;
- Figure 5 presents a side view with a partial cross section of the variation of the filling and weight-related dosing device for containers with a cylindrical neck;
- Figure 6 presents a variation of the realization of the fixing element.

### Invention Model

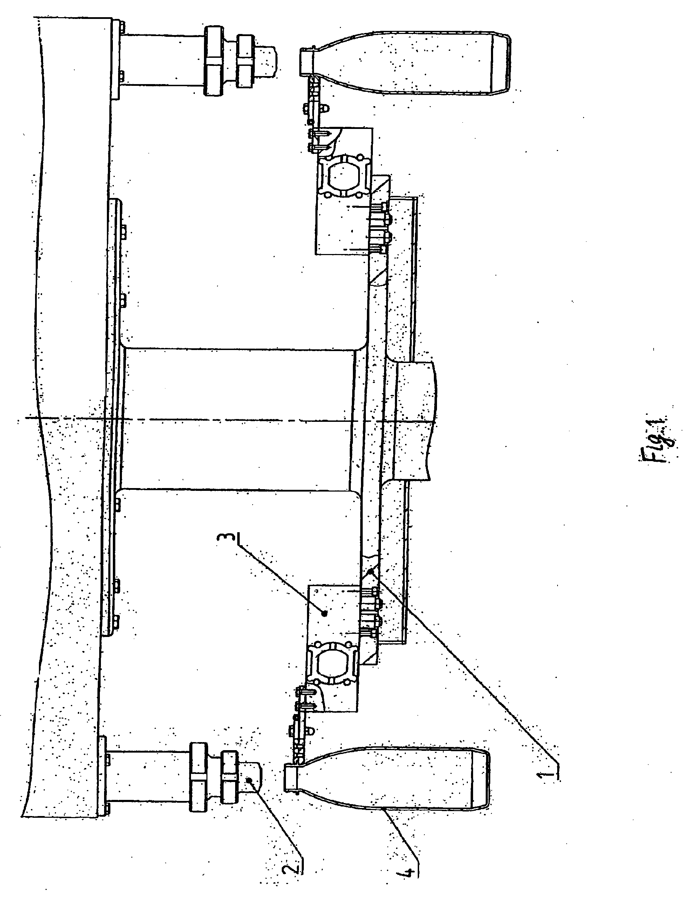

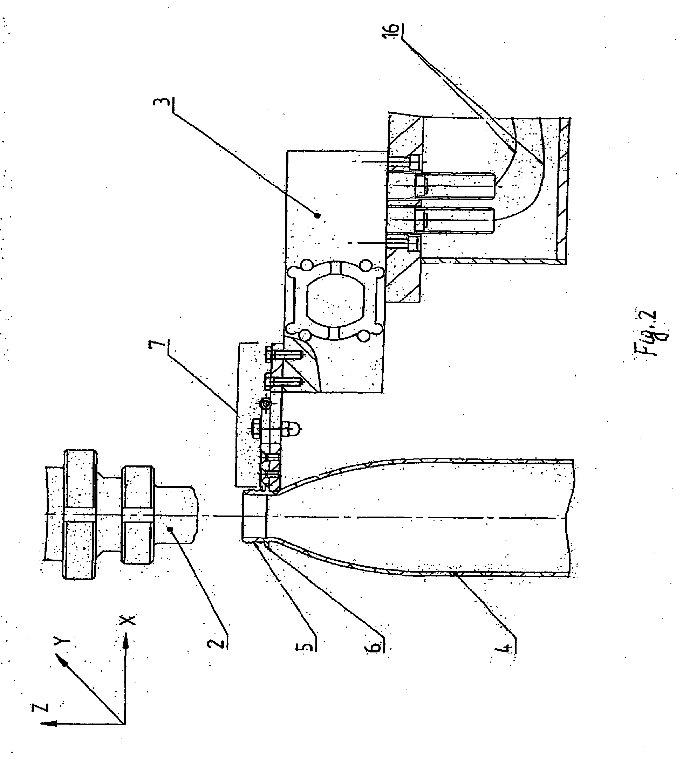

In compliance with the figures, the installation described above is of the carousel type and it includes a rotating platform 1 of the type which is well known in practice, with a typical filling system with filling nozzles 2 and a weighing mechanism 3 -Figure 1. Containers 4 with a cylindrical neck 5 are supported in a vertical position under filling nozzles 2 - Figure 2.

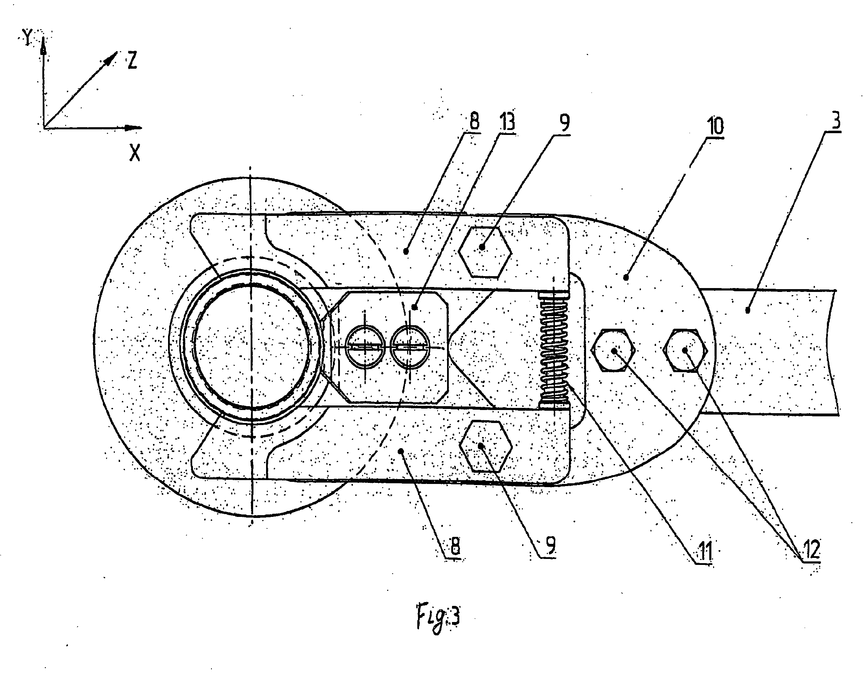

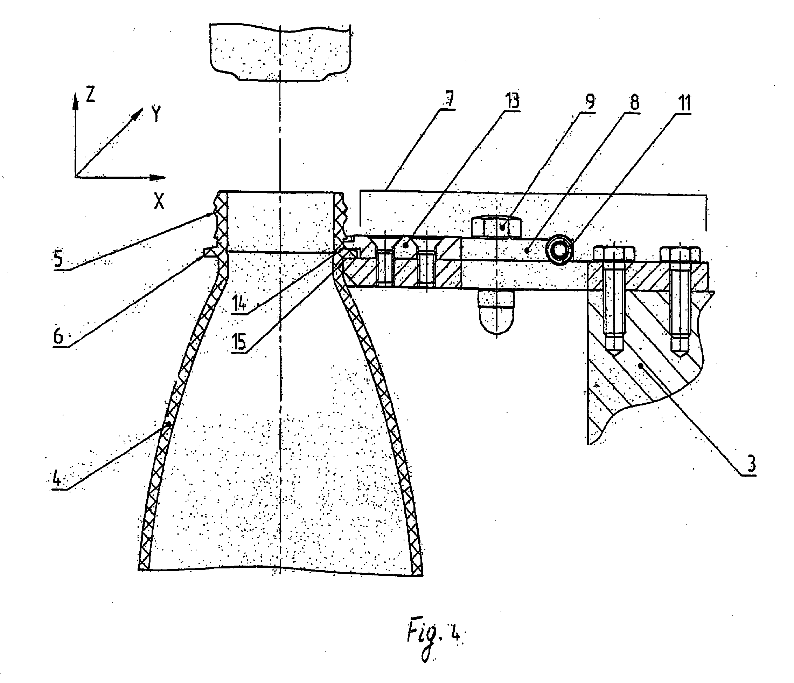

The filling and weight-related dosing device for containers 4 with a cylindrical neck 5 and a ring 6 around the cylindrical neck 5 consists of connected gripping device 7 and drawing and weighing mechanism 3 for containers 4 during the process of filling - Figure 2, Figure 3 and Figure 4. The gripping device 7 consists of two jaws 8, movable in a horizontal plane. Jaws 8 are mounted onto the supporting plate 10 by means of bolts 9. Bolts 9 also act as axes of rotation of the movable jaws 8 in a horizontal plane. The rear parts of the two movable jaws 8 are connected to each other by means of an elastic element - in this case spring 11. At their front end, the movable jaws 8 form a circular opening for gripping the neck 5 of the container 4.

The rear end of the supporting plate 10 is mechanically connected to the weighing mechanism 3 for the containers 4 by means of fixing elements 12.

Between the middle sections of the two movable jaws 8 is installed and attached to them by means of a bolt connection a changeable fixing element 13, connected onto the supporting plate 10 in a fixed position. A protrusion 14 is formed at the front end of the fixing element 13, allowing for part of the upper surface of the ring 6 on the cylindrical neck 5 of the container 4 to be pressed.

A rounded area 15 is also formed at the front end of the supporting plate 10, supporting and pressing part of the lower surface of the ring 6 on the cylindrical neck 5 of the container 4.

As was already mentioned above, the movable jaws 8 form a circle at their front end for gripping the neck 5 of the corresponding container 4. The diameter of the circle thus formed by the two front parts of the movable jaws 8 is smaller than the diameter of the cylindrical neck 5 of the container 4.

The drawing and weighing mechanism 3 is a solid body with integrated air-tight weight measuring element (tensometric sensor) and processor, monitoring container filling and weighing. The drawing and weighing mechanism 3 is connected to the control panel of the machine by means of cables 16 - Figure 2.

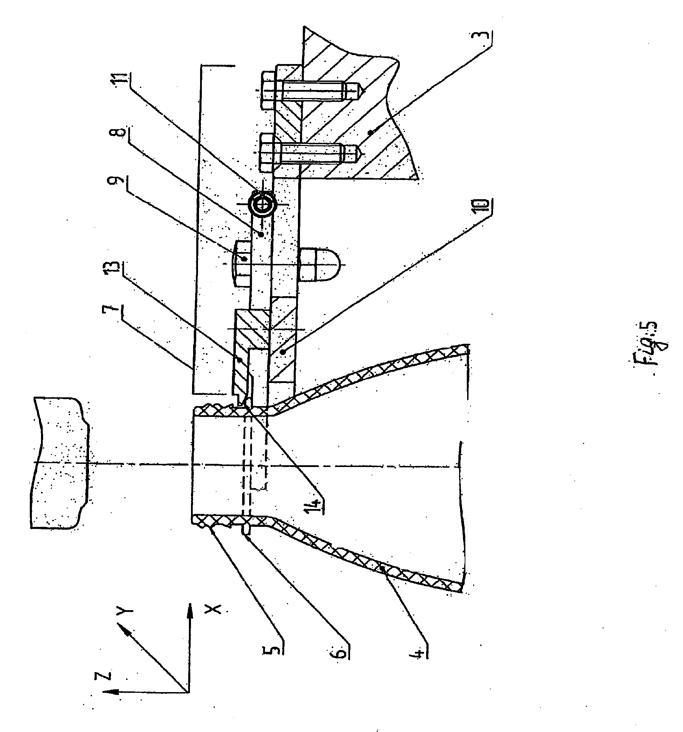

The movable jaws 8 of the gripping device 7 (Figure 5) grip the cylindrical neck 5 under the ring 6. With this variation solution, the protrusion 14 of the fixing element 13 compresses part of the upper surface of the ring 6.

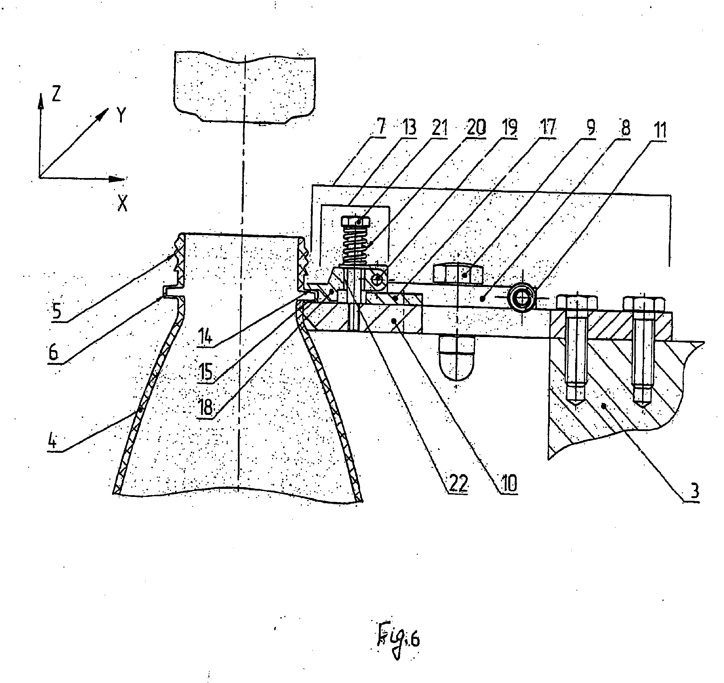

Figure 6 shows the fixing element 13, preferably for containers 4 whose cylindrical rings 6 are hollow and elastic, and have thin walls of uneven thickness. This fixing element 13 comprises supporting body 17 mounted to the supporting plate 10. A fixing tip 18 is mounted to the supporting body 17 by means of a universal joint 19. The fixing tip 18 is kept in a pressed position to the supporting plate 10 by a cylindrical spring 20. The cylindrical spring 20 is mounted around axle 21 going through opening 22, fabricated in the fixing tip 18. The opening 22 allows the vertical movement of fixing tip 18.

The principle of operation of the device is the following: When the container 4 is fed to the jaws 8 by the feeding device, which is not included in the attached figures, the side surface of the cylindrical neck 5 of the container 4 touches the inner ends of the movable jaws 8 and pushes them apart, overcoming the force of the spring 11. After the cylindrical neck 5 of the container 4 has entered the opening formed between the two movable jaws 8, the latter center the container 4 so that the ring 6 is located between the protrusion 14 of the fixing element 13 and the rounded area 15 of the supporting plate 10. In this way, when the carousel rotates during the process of filling and weighing, the container 4 is fixed in a stable position on the three inter-perpendicular planes with axes - X, Y and Z. This is a particularly important condition for the accurate operation of the weighing mechanism 3 and the high output rate of the entire installation.

With the realization, as shown in Figure 5, the movable jaws 8 of the gripping device 7 grip the cylindrical neck 5 of the container 4 under the ring 6. When the container 4 is fixed, the protrusion 14 of the changeable fixing element 13 presses part of the upper surface of the ring 6 to the movable jaws 8.

With the solution of the changeable fixing element 13, as shown in Figure 6, appropriate for use with containers whose cylindrical rings are hollow and elastic, and have thin walls of uneven thickness, when the container is delivered from the feeding device to the gripping device 7, the ring 6 overcomes the force of the cylindrical spring 20 by lifting the fixing tip 18. During this operation the ring 6 on the cylindrical neck 5 is positioned between the fixing element 18 and the supporting plate 10, which is effected by the force of the cylindrical spring 20.

## Claims

1. Container filling and weight-related dosing device for containers (4) with cylindrical neck (5) and ring (6) around the neck (5), consisting of connected gripping device (7) and mechanism (3) for container drawing and weighing during the process of container filling, where the gripping device (7) comprises two jaws (8) moving in a horizontal plane, mounted on the supporting plate (10) and interconnected by means of a spring (11), which jaws (8) form a round circular opening at their front end for gripping the neck (5) of the container (4), wherein the spring (11) of the gripping device (7) is concurrently connected to the rear ends of the two movable jaws (8), which are mounted onto the supporting plate (10), and wherein the rear end of the supporting plate (10) is connected to the weighing mechanism (3), which is of a closed, air-tight type, the device being **characterized in that** a changeable fixing element (13) is mounted between the middle parts of the two movable jaws (8), touching them, consisting of a bearing body (17) mounted on the supporting plate (10), with the fixing element (13) being attached to the bearing body (17) by means of swivel joint under spring (20) pressure, wherein the front end of the fixing element has a protrusion (14), allowing part of the upper surface of the ring (6) on the cylindrical neck (5) of the container (4) to be pressed, and **in that** the supporting plate (10) has a round-shaped area, supporting and pressing part of the lower surface of the ring (6) on the cylindrical neck (5) of the container (4).

2. A device, according to claim 1, **characterized by** the fact that the two movable jaws (8) of the gripping device (7) are mounted to and onto the supporting plate (10) so that they grip the cylindrical neck (5) of the container (4) under the ring (6).

3. A device, according to claims 1, **characterized by** the fact that the drawing and weighing mechanism (3) is connected to the rear end of the supporting plate (10).

## Patentansprüche

1. Vorrictung für Behälterberbefüllung und Gewichtsbezogene Dosierung für Behälter (4) mit zylindrischem Hals (5) und Wulst (6) um den Hals (5), die aus einer kombinierter Greifvorrichtung (7) und einem Mechanismus (3) zum Behälterfassen und Wiegen beim Behälterfüllen besteht, wobei die Greifvorrichtung (7) aus zwei sich in waagrechter Ebene bewegenden Klemmbacken (8) besteht, welche auf der Trägerplatte (10) befestigt sind und durch eine Feder (11) miteinander verbunden sind, deren Klemmbacken (8) an ihrer Stirnseite eine runde Öffnung (5) zum Greifen des Behälters (4) bilden, wobei die Feder (11) der Greifvorrichtung (7) gleichzeitig mit den hinteren Enden der beiden beweglichen Klemmbacken (8) verbunden ist, die auf der Trägerplatte (10) montiert sind, und wobei das hintere Ende der Trägerplatte (10) mit dem Wiegemechanismus (3) in geschlossener, luftdichter Bauart verbunden ist, ein austauschbares Befestigungselement (13) zwischen den beiden Mittelstücken der Vorrichtung montiert ist, welche **dadurch gekennzeichnet ist, dass** zwei bewegliche Klemmbacken (8) diese berühren und aus einer Unterlage (17) besteht, die auf einer Trägerplatte (10) montiert ist, dass das Befestigungselement (13) an der Unterlage (17) angebaut ist, die Fixierung an der Stirnseite unter dem Druck der Feder (20) über die Schwenkverbindung erfolgt, wobei dieses Element einen Vorsprung (14) aufweist, der es der oberen Fläche des Wulstes (6) am zylindrischen Hals (5) des Behälters (4) erlaubt, angepresst zu werden, wobei die Trägerplatte (10) einen abgerundeten Bereich aufweist, der Teile des Wulstes (6) am zylindrischen Hals (5) des Behälters (4) hält und anpresst.

2. Vorrichtung nach Anspruch 1, **dadurch gekennzeichnet, dass** die beiden beweglichen Klemmbacken (8) der Greifvorrichtung (7) so an und auf der Trägerplatte (10) montiert sind, dass sie den zylindrischen Hals (5) des Behälters (4) unter dem Wulst (6) greifen.

3. Vorrichtung nach Anspruch 1, **dadurch gekennzeichnet, dass** die Greif- und Wiegevorrichtung (3) mit dem hinteren Ende der Trägerplatte (10) verbunden ist.

## Revendications

1. Dispositif de remplissage de contenant et de dosage en fonction du poids pour récipients (4) à col cylindrique (5) présentant une partie annelée (6) autour du col (5), consistant en un dispositif de préhension associé (7) et un mécanisme (3) de traction et de pesage des récipients pendant le remplissage, dans lequel le dispositif de préhension (7) comprend deux mâchoires (8) mobiles dans un plan horizontal, montées sur la platine de support (10) et reliées par un ressort (11), l'extrémité avant de ces mâchoires (8) formant une ouverture circulaire permettant de saisir le col (5) du récipient (4), le ressort (11) du dispositif de préhension (7) étant concurremment connecté à l'extrémité arrière des deux mâchoires mobiles (8), qui sont montées sur la platine de support (10), et dans lequel l'extrémité arrière de la platine de support (10) est reliée au mécanisme de pesage (3), qui est de type fermé, étanche à l'air, un élément de fixation interchangeable (13) est monté entre les sections médianes du dispositif **caractérisé en ce que** deux mâchoires mobiles (8), qui les touche, consistant en un corps de support (17) monté sur la platine de support (10), l'élément de fixation interchangeable (13) étant fixé sur le corps de support (17) l'extrémité avant de la fixation au moyen d'un raccord articulé soumis à la pression d'un ressort (20), dans lequel cet élément présente une partie saillante (14), qui permet d'appuyer sur une partie de la surface supérieure de la partie annelée (6) du col cylindrique (5) du récipient (4), et **en ce que** la platine de support (10) présente une partie arrondie, qui supporte et appuie sur une partie de la surface inférieure de la partie annelée (6) du col cylindrique (5) du récipient (4).

2. Un dispositif, selon la revendication 1, **caractérisé par le fait que** les deux mâchoires mobiles (8) du dispositif de préhension (7) sont montées sur la platine de support (10) de sorte qu'elles saisissent le col cylindrique (5) du récipient (4) sous sa partie annelée (6).

3. Un dispositif, selon la revendication 1, **caractérisé par le fait que** le mécanisme de traction et de pesage (3) est connecté à l'extrémité arrière de platine de support (10).
